# FASCICULE DE BREVET EUROPEEN

(11) **EP 3 149 320 B1**
(45) Date de publication et mention de la délivrance du brevet: **11.03.2020**
(21) Numéro de dépôt: 15725799.9
(22) Date de dépôt: 24.04.2015
(51) Int. Cl.: F02M 37/30, F02M 37/22, F02M 37/24, B01D 21/00

(54) **BOÎTIER DE DÉCANTATION PAR GRAVITÉ POUR UN CIRCUIT DE CIRCULATION DE LIQUIDE**
SCHWERKRAFTBASIERENDER ABSCHEIDUNGSBEHÄLTER FÜR EINEN FLÜSSIGKEITSKREISLAUF
CONTAINER FOR GRAVITY WATER SEPARATION FOR A LIQUID CIRCULATION CIRCUIT

(30) Priorité: 27.05.2014 FR 1454756
(43) Date de publication de la demande: 05.04.2017
(73) Titulaire: PSA Automobiles SA, 78300 Poissy (FR)
(72) Inventeur: SACADURA, Jean Christian, 92400 Courbevoie (FR); GERARD, Jocelyn, 92400 Courbevoie (FR)
(86) Numéro de dépôt international: PCT/FR2015/051122
(87) Numéro de publication internationale: WO 2015/181457

(56) Documents cités:
- WO-A1-01/34273
- WO-A1-97/18025
- WO-A1-2010/149642
- DE-A1-102012 000 599
- US-A1- 2003 116 490
- US-A1- 2005 103 728
- US-A1- 2008 110 812

## Description

La présente invention se rapporte au domaine des circuits de circulation de liquide. L'invention concerne plus particulièrement un boitier de décantation par gravité pour un circuit de circulation de liquide d'un élément contenu dans un liquide, l'élément étant susceptible de former un précipité en deçà d'une température seuil.

Le circuit de carburant des moteurs Diesel est très sensible à la qualité des carburants dans les réseaux de distribution et au processus de formation de paraffine en conditions froides. En effet, on sait qu'en deçà d'une température critique dite point de trouble, la paraffine que contient le gazole forme des germes, qui au-delà d'une certaine taille provoque la formation de cristaux visibles. Lorsque que la taille des cristaux augmente, ils peuvent colmater les éléments du circuit de carburant.

En conditions froides, pendant les phases d'arrêt moteur prolongées et suivant la quantité de paraffine formée dans les tuyaux compris entre le filtre à carburant et la pompe haute pression qui élève le carburant à sa pression d'injection, cette paraffine va générer une sorte de bouchon et va impacter le bon fonctionnement de moteur. En fonction de l'importance de la quantité de paraffine on peut avoir les défaillances suivantes qui dans tous les cas ont un effet négatif perçu par le client :
- Le moteur ne démarre pas,
- Le moteur démarre et cale au bout de quelques secondes au ralenti ou pendant que le véhicule roule, ce qui dans ce dernier cas pose aussi un problème de sécurité.

Un moyen d'empêcher la formation de cristaux de paraffine est de chauffer en permanence le combustible. On connait, par exemple du document US2005103728A1, des filtres à gazole équipé de moyens de chauffage qui permet de ralentir le colmatage par la paraffine du filtre à gazole du circuit de carburant. Cependant, pendant les phases d'arrêt moteur prolongées, si ces moyens de chauffage sont reliés au circuit de liquide de refroidissement celui-ci se refroidit aussi et les moyens de chauffage deviennent inactifs. Si ces moyens de chauffage sont électriques ceux-ci sont désactivés et sont inopérants.

On connait encore du document FR2481751 la possibilité d'utiliser l'énergie une source d'énergie extérieure au véhicule pour chauffer le combustible lors des phases d'arrêt du véhicule. Cependant, cette solution reste énergivore et n'est pas autonome car elle requiert la présence d'une connexion électrique.

On connait par ailleurs du document WO97/18025A1, des boitiers de décantation.

Un objectif de la présente invention est de proposer un dispositif qui permet, de manière autonome, d'éviter les problèmes de démarrage et de calage moteur suite à une phase d'arrêt prolongée du moteur en conditions froides.

Pour atteindre cet objectif, il est prévu selon l'invention un circuit de circulation d'un carburant comprenant un filtre à carburant et une pompe haute pression, un boitier de décantation par gravité d'un élément contenu dans le carburant, l'élément étant susceptible de former des particules solides en deçà d'une température dite point de trouble, ce boitier étant disposé entre la sortie du filtre à carburant et l'entrée de la pompe haute pression, et comprenant, par référence à la verticale,
- une entrée de liquide en partie haute du boîtier,
- une sortie de liquide en partie haute du boîtier,
- un fond en partie basse du boîtier,
- des moyens de chauffage dans sa partie basse,
caractérisé en ce qu'il comprend des moyens de piégeage interposés entre l'entrée et la sortie de liquide d'une part et le fond du boîtier d'autre part, les dits moyens comprenant deux volets (14b) en quinconce conçus de sorte à laisser se déposer au fond du boitier les particules solides formées lors d'un arrêt de la circulation du liquide dans le circuit et retenir le dépôt de particules solides au fond du boitier lors d'une phase de reprise de circulation du liquide dans le circuit, et en ce que les deux volets sont mobiles.

A noter que le dispositif de l'invention vient s'ajouter au filtre, sans nécessairement le remplacer donc.

Dans une variante, la partie du circuit compris entre le filtre à carburant et la pompe haute pression présente une forme de U, avec le filtre à carburant et la pompe haute pression à chaque extrémité du U et avec le boitier de décantation au point bas du U.

L'invention porte aussi sur un véhicule automobile comprenant un circuit d'alimentation en carburant selon l'une quelconque des variantes précédemment décrites.

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un circuit de circulation de carburant pour véhicule automobile équipé d'un premier exemple de boitier de décantation non couvert par l'invention.
- Les figures 2 et 3 présentent schématiquement en coupe d'autres exemples de réalisation du boitier de décantation non couverts par l'invention.
- La figure 4 présente schématiquement en coupe un exemple de réalisation du boîtier de décantation selon l'invention.

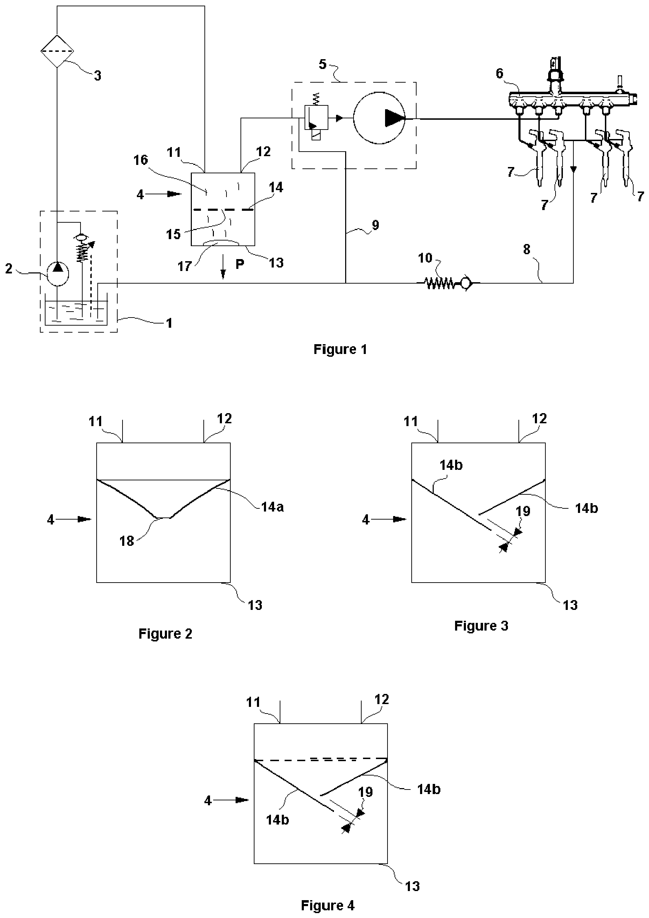

La figure 1 présente un circuit de carburant d'un moteur à combustion interne, par exemple un moteur Diesel, équipant par exemple un véhicule automobile.

Le circuit de carburant comprend un réservoir 1 de stockage de carburant. Lorsque le moteur est en fonctionnement, le carburant est pompé du réservoir 1 par une pompe 2 de gavage et envoyé au moyen d'un tuyau vers un filtre 3 à carburant destiné à éliminer les impuretés présentes dans le gazole. Le gazole circule ensuite du filtre 3 à gazole vers une pompe dite haute pression destinée à élever le carburant à sa pression d'injection. Le gazole est ensuite acheminé vers un injecteur 7. Sur la figure 1 sont représentés quatre injecteurs 7, cependant le nombre d'injecteur peut être différent. Le gazole peut transiter de la pompe 5 vers l'injecteur 7 par l'intermédiaire d'un rail 6 de distribution commun.

Le gazole qui n'est pas injecté dans le moteur par les injecteurs 7 est retourné au réservoir 1 par une conduite 8 de retour injecteur. Le circuit de carburant comprend encore une conduite 9 de retour de pompe 5 haute pression qui retourne le carburant qui n'a pas été mis sous pression vers le réservoir 1. Un clapet 10 anti-retour de carburant peut être prévu sur la conduite 8 de retour injecteur.

Conformément à l'invention, il est prévu de disposer dans le circuit de carburant, entre le filtre 3 à gazole et la pompe 5 haute pression, un boitier 4 de décantation des cristaux de paraffine susceptibles de se former en deçà d'une température dite point de trouble. La figure 1 illustre un premier exemple de boitier 4 de décantation, non couvert par l'invention. Le boîtier 4 de décantation comprend :
- une entrée 11 de carburant en partie haute du boîtier 4,
- une sortie 12 de carburant en partie haute du boîtier 4,
- un fond 13 en partie basse du boîtier 4,

Le haut et le bas sont ici définis par référence à une disposition du boitier 4 par rapport à la verticale, autrement dit parallèle à la direction de la pesanteur P.

Le boitier 4 de décantation comprend encore des moyens de piégeage sous forme d'une une grille 14 interposée de sorte à séparer l'entrée 11 de carburant, la sortie 12 de carburant d'une part et le fond 13 du boîtier d'autre part. Autrement dit l'entrée et sortie 12 de carburant sont toutes les deux d'un même côté de la grille 14 tandis que fond 13 du boîtier est de l'autre côté de la grille 14. Les moyens de piégeage séparent la partie haute de la partie basse du boitier 4. La grille 14 présente une maille 15 dont la taille est choisie de sorte à laisser se déposer au fond 13 du boitier 4 les cristaux 16 de paraffine pour former un dépôt 17. La taille de la maille est aussi choisie de sorte à retenir le dépôt 17 de particules solides au fond du boitier 4 de décantation lors d'une phase de démarrage du moteur et donc d'une reprise de la circulation du carburant dans le circuit de carburant qui pourrait sans la grille 14 entraîner le dépôt 17 vers la pompe 5 haute pression.

Ainsi, pendant la phase d'arrêt du moteur, le carburant présent dans le circuit de carburant stagne. En conditions suffisamment froide, la paraffine formée dans la partie du circuit comprise entre le filtre 3 à carburant et la pompe 5 haute pression se dépose au fond du boitier 4 de décantation par effet de gravité.

Au démarrage du moteur, la grille 14 va empêcher le dépôt 17 de paraffine accumulée au fond du boîtier 4 de décantation de remonter dans la pompe 5 haute pression pendant la mise en route du moteur. La pompe 5 haute pression sera donc alimentée en carburant sans paraffine ou très faiblement chargé en germes ce qui permet au moteur de démarrer et d'avoir un fonctionnement sans effet négatif pour le client.

De préférence, la taille de la maille choisie est comprise entre 100 µm et 3 mm. Une taille de maille inférieure à 100 µm peut être insuffisante pour que la grille 14 puisse être traversée par les cristaux de paraffine. Une taille de maille supérieure à 3 mm pourrait laisser la possibilité qu'une partie du dépôt 17 remonte dans la pompe 5 haute pression.

Afin d'améliorer l'efficacité du dispositif, il est prévu que la partie du circuit carburant compris entre le filtre 3 à gazole et la pompe 5 haute pression présente une forme de U, avec le filtre 3 à gazole et la pompe 5 haute pression à chaque extrémité du U et avec le boitier 4 de décantation au point bas du U.

La figure 2 présente un second exemple boitier 4 de décantation comprenant d'autres moyens de piégeage permettant de laisser se déposer au fond du boitier les particules solides de paraffine formées lors d'un arrêt de la circulation du liquide dans le circuit et de retenir le dépôt de particules solides de paraffine au fond 13 du boitier 14 de décantation lors d'une phase de démarrage du moteur et donc de reprise de circulation du carburant dans le circuit. Dans cet exemple, les moyens de piégeage présentent la forme d'un entonnoir 14a. L'entonnoir 14a se termine par un orifice 18 inférieur destiné à laisser le passage des cristaux de paraffine vers le fond 13 du boitier. La forme en entonnoir permet de faire passer les cristaux par glissement et quel que soit leur forme tridimensionnelle. Le diamètre de l'orifice 18 est de préférence compris entre 1 et 3 mm.

La figure 3 présente un troisième exemple de boitier 4 de décantation comprenant d'autres moyens de piégeage. Dans cet exemple, les moyens de piégeage comprennent deux volets 14b fixes en quinconce orienté en direction du fond 13 du boîtier 4 de décantation. Les volets 14b peuvent être pleins ou en forme de grille. Les volets 14b en quinconce sont disposés de sorte à offrir un passage 19 dont la hauteur est de préférence comprise entre 2 et 3 mm.

La figure 4 présente un exemple de boîtier 4 selon l'invention qui est une variante du troisième exemple dans laquelle les deux volets sont mobiles de sorte à pouvoir se relever au cours du redémarrage du moteur (position en traits pointillés sur la figure 4). L'action peut être effectuée par des moyens actifs tels qu'un actionneur électromagnétique. De préférence, les volets sont juste pivotant de sorte à se relever sous l'action du dépôt en fond 13 de boitier 4 tentant de remonter au cours de la reprise de la circulation de carburant et repoussant les volets 14b.

Pour chacun des exemples présentés aux figures 1 à 4, on peut également prévoir un réchauffeur, par exemple une résistance électrique, disposé au fond du boitier 4 de décantation pour faciliter la dissolution de la paraffine accumulée et ainsi purger le boitier 4 de décantation après le démarrage du moteur.

Le volume interne du boitier de décantation peut être déterminé en fonction du volume de carburant présent dans la partie du circuit de carburant compris entre la sortie du filtre 3 à gazole et l'entrée de la pompe 5 haute pression et d'un seuil de température déterminé en dessous de la température de trouble.

A titre d'exemple, pour un gazole et une température de -3°C en-dessous de la température de trouble donnant 20% de paraffine formée, si le volume de carburant présent dans la partie du circuit de carburant compris entre la sortie du filtre 3 à gazole et l'entrée de la pompe 5 haute pression est de 42 cm³, le volume interne du boitier 4 de décantation est Vₘᵢₙᵢ= 0,2 x 42 = 8,4 cm³. On peut déterminer ensuite le volume interne du boitier 4 de décantation V_{bd} = α Vₘᵢₙᵢ, avec α un coefficient de sécurité supérieur à 1. Le coefficient α permet aussi d'avoir un boitier dont le volume interne permet de constituer une réserve « d'urgence » de carburant pour amorcer le démarrage.

L'invention permet de rendre plus fiable les démarrages de moteur en conditions froides pour tous types de carburant, d'éviter les effets client tels qu'un calage pendant une phase d'accélération et donc d'éviter le retour du véhicule en réseau de maintenance et de réparation et par conséquent de réduire les coûts de garantie.

L'invention est décrite dans le cadre d'un circuit de circulation d'un carburant tel que le gazole, cependant le boitier de l'invention peut être disposé plus généralement dans un circuit de circulation d'un liquide, le liquide comprenant un élément susceptible de former des particules solides en deçà d'une température dite point de trouble.

## Revendications

1. Circuit de circulation d'un carburant comprenant un filtre à carburant (3) et une pompe (5) haute pression, un boitier (4) de décantation par gravité d'un élément contenu dans le carburant, l'élément étant susceptible de former des particules solides en deçà d'une température dite point de trouble, ce boitier (4) étant disposé entre la sortie du filtre à carburant (3) et l'entrée de la pompe (5) haute pression, et comprenant, par référence à la verticale,
- une entrée (11) de liquide en partie haute du boîtier (4),
- une sortie (12) de liquide en partie haute du boîtier (4),
- un fond (13) en partie basse du boîtier,
- des moyens de chauffage dans sa partie basse,
**caractérisé en ce qu'**il comprend des moyens de piégeage (14, 14a, 14b) interposés entre l'entrée (11) et la sortie (12) de liquide d'une part et le fond (13) du boîtier (4) d'autre part, les dits moyens (14, 14a, 14b) comprenant deux volets (14b) en quinconce conçus de sorte à laisser se déposer au fond du boitier (4) les particules solides formées lors d'un arrêt de la circulation du liquide dans le circuit et retenir le dépôt de particules solides au fond (13) du boitier (4) lors d'une phase de reprise de circulation du liquide dans le circuit, et **en ce que** les deux volets (14b) sont mobiles.

2. Circuit de circulation d'un carburant selon la revendication 1, **caractérisé en ce que** la partie du circuit compris entre le filtre (3) à carburant et la pompe (5) haute pression présente une forme de U, avec le filtre (3) à carburant et la pompe (5) haute pression à chaque extrémité du U et avec le boitier (4) de décantation au point bas du U.

3. Véhicule automobile **caractérisé en ce qu'**il comprend un circuit d'alimentation en carburant selon la revendication 1 ou la revendication 2.

## Patentansprüche

1. Zirkulationskreislauf eines Kraftstoffs, der ein Kraftstofffilter (3) und eine Hochdruckpumpe (5), ein Abscheidungsgehäuse (4) durch Schwerkraft eines Elements, das in dem Kraftstoff enthalten ist, umfasst, wobei das Element unterhalb einer Temperatur, Trübungspunkt genannt, Feststoffteilchen bilden kann, wobei dieses Gehäuse (4) zwischen dem Ausgang des Kraftstofffilters (3) und dem Eingang der Hochdruckpumpe (5) angeordnet ist und in Bezug auf die Senkrechte
- einen Flüssigkeitseingang (11) im oberen Teil des Gehäuses (4),
- einen Flüssigkeitsausgang (12) im oberen Teil des Gehäuses (4),
- einen Grund (13) im unteren Teil des Gehäuses (4),
- Heizmittel in seinem unteren Teil umfasst,
**dadurch gekennzeichnet, dass** er Mittel zum Einfangen (14, 14a, 14b) umfasst, die zwischen dem Flüssigkeitseingang (11) und dem Flüssigkeitsausgang (12) einerseits und dem Boden (13) des Gehäuses (4) andererseits eingefügt sind, wobei die Mittel (14, 14a, 14b) zwei Klappen (14b) im Zickzack umfassen, die derart konzipiert sind, dass sie die Feststoffteilchen, die bei einem Stoppen der Zirkulation der Flüssigkeit in dem Kreislauf gebildet werden, sich auf dem Grund des Gehäuses (4) ablagern lassen und die Ablagerung von Feststoffteilchen auf dem Grund (13) des Gehäuses (4) bei einer Wiederaufnahmephase der Zirkulation der Flüssigkeit in dem Kreislauf zurückhalten, und dass die zwei Klappen (14b) beweglich sind.

2. Zirkulationskreislauf eines Kraftstoffs nach Anspruch 1, **dadurch gekennzeichnet, dass** der Teil des Kreislaufs, der zwischen dem Kraftstofffilter (3) und der Hochdruckpumpe (5) liegt, eine U-Form mit dem Kraftstofffilter (3) und der Hochdruckpumpe (5) an jedem Ende des U und mit dem Abscheidungsgehäuse (4) am Tiefpunkt des U aufweist.

3. Kraftfahrzeug, **dadurch gekennzeichnet, dass** es einen Kraftstoffversorgungskreislauf nach Anspruch 1 oder Anspruch 2 umfasst.

## Claims

1. A circulation circuit of a fuel including a fuel filter (3) and a high pressure pump (5), a container (4) for gravity settling of an element contained in the fuel, the element being liable to form solid particles below a temperature referred to as the cloud point, this container (4) being disposed between the outlet of the fuel filter (3) and the inlet of the high pressure pump (5), and including, with reference to the vertical,
- an inlet (11) of liquid in the upper part of the container (4),
- an outlet (12) of liquid in the upper part of the container (4),
- a bottom (13) in the lower part of the container (4),
- heating means in its lower part,
**characterized in that** it includes trapping means (14, 14a, 14b) interposed between the inlet (11) and the outlet (12) of liquid on the one hand and the bottom (13) of the container (4) on the other hand, the said means (14, 14a, 14b) including two staggered flaps (14b) designed so as to allow the solid particles, formed during a stoppage of the circulation of the liquid in the circuit, to settle at the bottom of the container (4), and to retain the deposit of solid particles at the bottom (13) of the container (4) during a phase of resumption of circulation of the liquid in the circuit, and **in that** the two flaps (14b) are movable.

2. The circuit for circulation of a fuel according to claim 1, **characterized in that** the portion of the circuit comprised between the fuel filter (3) and the high pressure pump (5) has a U shape, with the fuel filter (3) and the high pressure pump (5) at each end of the U and with the settling container (4) at the bottom point of the U.

3. A motor vehicle, **characterized in that** it includes a fuel supply circuit according to claim 1 or claim 2.
